# EUROPÄISCHE PATENTSCHRIFT

(11) **EP 3 990 798 B1**
(45) Veröffentlichungstag und Bekanntmachung des Hinweises auf die Patenterteilung: **14.06.2023**
(21) Anmeldenummer: 20735128.9
(22) Anmeldetag: 24.06.2020
(51) Int. Cl.: F16D 51/18

(54) **ELEKTRISCHE TROMMELBREMSE FÜR EIN DREHBARES ELEMENT**
ELECTRIC DRUM BRAKE FOR ROTATING ELEMENT
FREIN A TAMBOUR ÉLECTRIQUE POUR ÉLÉMENT ROTATIF

(30) Priorität: 28.06.2019 DE 102019209523
(43) Veröffentlichungstag der Anmeldung: 04.05.2022
(73) Patentinhaber: Continental Automotive Technologies GmbH, 30165 Hannover (DE)
(72) Erfinder: BACH, Uwe, 60488 Frankfurt am Main (DE); GUCKES, Lennart, 60488 Frankfurt am Main (DE); GÄDKE, Martin, 60488 Frankfurt am Main (DE); STAUDER, Peter, 60488 Frankfurt am Main (DE); HOFFMANN, Jens, 60488 Frankfurt am Main (DE); PLA, Sébastien, 60488 Frankfurt am Main (DE)
(74) Vertreter: Continental Corporation
(86) Internationale Anmeldenummer: PCT/EP2020/067643
(87) Internationale Veröffentlichungsnummer: WO 2020/260362

(56) Entgegenhaltungen:
- EP-A1- 2 518 360
- WO-A1-2019/101565
- US-A- 1 861 591
- US-A- 2 068 654

## Beschreibung

Die Erfindung betrifft eine elektrische Trommelbremse für ein drehbares Element eines Personenkraftwagens (PKW), insbesondere für eine Welle. Es handelt sich somit um eine PKW-Trommelbremse.

Konventionelle hydraulisch betätigbare Trommelbremsen werden schon lange in Personenkraftwagen verwendet. Eine verhältnismäßig neue Ausführung einer Trommelbremse ist die Duo-Duplex-Trommelbremse, wie sie beispielsweise in der Druckschrift EP 2 518 360 A1 offenbart ist.

Eine kombiniert hydraulisch und elektromagnetisch betätigbare Trommelbremse einschließlich rheostatischer Regelung umfassend eine besondere ringförmig gestaltete Bremsbacke geht aus der US 2 377 277 A hervor. Dabei ist eine hydraulische Spreizvorrichtung in eine Ausnehmung zwischen zwei Enden einer biegeweich gestalteten Bremsbacke allokiert, und der elektromagnetische Aktuator wirkt über eine seitlich nachgiebige Hebelanlenkung auf ein einzelnes Ende dieser Bremsbacke.

Eine gattungsgemäße elektrische Trommelbremse umfassend die Merkmale des Oberbegriffs des Patentanspruchs 1 geht aus der WO 2020/260362 A1 hervor.

Es ist eine Aufgabe der Erfindung, eine bekannte Trommelbremse alternativ oder besser auszuführen. Dies wird erfindungsgemäß durch eine elektrische Trommelbremse gemäß Merkmalskombination von Anspruch 1 erreicht. Demzufolge weist die erfindungsgemäße elektrische Trommelbremse eine Anzahl von Kraftmesseinrichtungen zwischen der Elektromagnetanordnung und den Bremsbacken auf. Dadurch kann die wirkende Kraft der Elektromagnetanordnung auf die Bremsbacken in vorteilhafter Weise überwacht werden.

Zusätzlich oder anstelle von Kraftmesseinrichtungen können auch beispielsweise Druckmesseinrichtungen, Wegmesseinrichtungen und/oder Dehnungsmesseinrichtungen verwendet werden. Vorteilhafte Ausgestaltungen der Erfindung können beispielsweise den Unteransprüchen entnommen werden.

Die Erfindung betrifft eine elektrische Trommelbremse für ein drehbares Element eines Personenkraftwagens, wobei das drehbare Element beispielsweise eine Welle sein kann. Die Trommelbremse weist eine Bremstrommel auf, welche drehfest mit dem drehbaren Element verbunden ist. Die Trommelbremse weist eine Bremsfläche auf, welche drehfest mit der Bremstrommel verbunden ist. Die Bremsfläche kann dabei an einem zur Bremstrommel separaten Element angebracht sein oder kann auch an der Bremstrommel ausgebildet sein.

Die elektrische Trommelbremse weist eine Elektromagnetanordnung auf, welche zumindest eine elektrische Spule aufweist, welche bei Bestromung ein Magnetfeld erzeugt, das die Elektromagnetanordnung gegen die Bremsfläche drückt, so dass die Elektromagnetanordnung von der Bremsfläche begrenzt mitgedreht wird. Dies bedeutet insbesondere, dass typischerweise ohne Bestromung der elektrischen Spule die Elektromagnetanordnung nicht von der Bremsfläche mitgedreht wird, sondern relativ zu einer Referenzstruktur der Trommelbremse, beispielsweise eine Befestigung oder ein Gehäuse, nicht verdreht wird.

Die elektrische Trommelbremse weist mindestens zwei Bremsbacken auf. Die Elektromagnetanordnung und die Bremsbacken sind so angeordnet, dass die Bremsbacken bei Drehung der Elektromagnetanordnung von der Elektromagnetanordnung gegen die Bremstrommel gedrückt werden. Dies ermöglicht insbesondere eine Betätigung der Trommelbremse.

Gemäß einer bevorzugten Ausführung weist die elektrische Trommelbremse eine Vorspannanordnung auf, welche die Elektromagnetanordnung in eine von der Bremsfläche beabstandete Lage vorspannt. Dadurch kann ein ständiger Reibkontakt zwischen Elektromagnetanordnung und Bremsfläche vermieden werden, welcher bei Ausführungen gemäß dem Stand der Technik vorgesehen ist. Dies ermöglicht insbesondere eine höhere Laufleistung und Zuverlässigkeit in automotiven Anwendungen, welche eine Auslegung auf hohe Geschwindigkeiten und Strecken erfordern. Es sei erwähnt, dass die Ausführung derart, dass die Elektromagnetanordnung in eine von der Bremsfläche beabstandete Lage vorgespannt wird, als eigenständiger Erfindungsaspekt angesehen werden kann.

Gemäß einer möglichen Ausführung ist die Bremsfläche an der Bremstrommel ausgebildet. Gemäß einer weiteren möglichen Ausführung ist sie an einer zur Bremstrommel separaten, mit dem drehbaren Element drehfest verbundenen Scheibe ausgebildet.

Die Elektromagnetanordnung kann insbesondere ringförmig ausgeführt sein. Dies hat sich in typischen Trommelbremsen als vorteilhaft erwiesen. Auch andere Geometrien sind jedoch möglich.

Die Elektromagnetanordnung kann gemäß einer bevorzugten Ausführung ein Joch mit einem E-förmigen oder einem W-förmigen Querschnitt aufweisen. Dies ermöglicht es insbesondere, zwei elektrische Spulen vorzusehen, wobei typischerweise jeweils eine elektrische Spule in einer Nut der E-Form oder W-Form angeordnet ist. Es sei erwähnt, dass die Ausbildung der Elektromagnetanordnung mit einem Joch in E-Form oder W-Form als eigenständiger Erfindungsaspekt angesehen werden kann.

Dementsprechend weist die elektrische Trommelbremse gemäß einer bevorzugten Ausführung zwei elektrische Spulen auf. Dadurch kann insbesondere eine hohe Redundanz erreicht werden. Sollte eine Spule beispielsweise ausfallen, steht eine zweite Spule zur Betätigung der Trommelbremse zur Verfügung. Auch die Verwendung von nur einer Spule oder von mehr als zwei Spulen ist jedoch möglich.

Bevorzugt ist jede elektrische Spule in einer jeweiligen Nut eines Jochs der Elektromagnetanordnung angeordnet. Dabei kann das Joch beispielsweise die bereits weiter oben erwähnte E-Form oder W-Form haben. Auch andere Formen sind jedoch möglich, d.h. die Nuten zur Aufnahme der Spulen können auch anderweitig in dem Joch angeordnet sein.

Bevorzugt weist die Vorspannanordnung eine Anzahl von Federn auf. Dadurch kann die gewünschte Vorspannwirkung in einfacher Weise erreicht werden.

Gemäß einer bevorzugten Ausführung ist die Bremstrommel stirnseitig aus Stahl ausgebildet. Sie kann insbesondere in einem Reibbereich der Bremsbacken aus Grauguss ausgebildet sein. Eine derartige Materialkombination hat sich für typische Anwendungsfälle als vorteilhaft erwiesen.

Die Elektromagnetanordnung kann gemäß einer vorteilhaften Ausführung ein Joch aus Magnetblech aufweisen. Sie kann auch einen Reibbereich aufweisen, welcher im aktivierten Zustand mit der Bremsfläche in Eingriff kommt. Dieser kann insbesondere aus Kugelgraphitguss ausgebildet sein. Derartige Ausführungen und Materialkombinationen haben sich für typische Anwendungen als vorteilhaft erwiesen. Es sei erwähnt, dass die Ausbildung der Elektromagnetanordnung aus mindestens zwei Materialien sowie bevorzugt aus den hier angegebenen Materialien als eigenständiger Erfindungsaspekt angesehen werden kann.

Die elektrische Trommelbremse kann bevorzugt einen Rastmechanismus zum mechanischen Halten der Elektromagnetanordnung an der Bremsfläche aufweisen. Mittels eines solchen Rastmechanismus kann die Wirkung der Trommelbremse insbesondere im aktivierten Zustand aufrechterhalten werden, auch wenn beispielsweise eine Bestromung der Spule beendet wird. Dies ermöglicht beispielsweise den Einsatz der Trommelbremse als Parkbremse.

Die elektrische Trommelbremse kann gemäß einer vorteilhaften Ausführung teilweise oder vollständig in einer Flüssigkeit oder in Getriebeöl angeordnet sein. Dies ermöglicht insbesondere eine Verringerung von Reibung sowie eine vorteilhafte Kühlung.

Die elektrische Trommelbremse kann insbesondere eine Duo-Duplex-Trommelbremse sein. Für derartige Ausführungen von Trommelbremsen haben sich die hierin beschriebenen Ausführungen als besonders vorteilhaft erwiesen.

Die Elektromagnetanordnung kann insbesondere eine Anzahl von Nocken aufweisen, welche bei Drehung der Elektromagnetanordnung mit den Bremsbacken zu deren Betätigung in Eingriff kommen. Eine solche Betätigung mittels Nocken stellt eine einfache und zuverlässige Betätigungsmöglichkeit dar.

Das drehbare Element kann insbesondere eine Welle sein. Eine solche Welle kann beispielsweise eine Antriebswelle oder eine Radwelle eines Personenkraftwagens sein. An solchen Stellen ist eine Bremswirkung typischerweise zum Abbremsen des Personenkraftwagens gewünscht.

Die Bremstrommel kann insbesondere aus Aluminium bestehen und eine eingelegte magnetisch leitende Bremsfläche aufweisen. Eine solche Ausführung bietet insbesondere den Vorteil eines besonders geringen Gewichts aufgrund der Verwendung von Aluminium.

Gemäß einer Ausführung können mehrere Spulen kreisförmig verteilt mit axialen Spulenkernen angeordnet sein. Dies ermöglicht die Verwendung von mehreren Spulen in einer entsprechenden Anordnung.

Bei der erfindungsgemäßen elektrischen Trommelbremse handelt es sich insbesondere um eine stromlos offene Bremse. Dies bedeutet, dass nur durch Bestromung eine Aktivierung erfolgen kann, ansonsten bremst die Bremse nicht.

Die hierin beschriebene elektrische Trommelbremse kann insbesondere vorteilhaft bei Fahrzeugen mit elektrischen Antriebsmaschinen zum Einsatz kommen, die einen Teil der Fahrzeugverzögerung über die entsprechenden elektrischen Maschinen absetzen können. Beispielsweise kann die Trommelbremse bei radmittigen elektrischen Antrieben zum Einsatz kommen. Sie kann insbesondere auch für Notbremsungen oder höhere Abbremsungen verwendet werden. Dies schränkt jedoch in keiner Weise die mögliche Verwendbarkeit der erfindungsgemäßen Trommelbremse ein, sie kann grundsätzlich für jegliche Abbremsung eines drehbaren Elements verwendet werden.

Die weiter oben bereits erwähnten Messeinrichtungen können beispielsweise als Messeinrichtung für ein Bremsmoment ausgelegt sein. Sie können beispielsweise in einer Verbindung zwischen Magnetaktuator und Schuhen integriert sein.

Eine Elektronik und/oder Logik zur Regelung der Bestromung der Spule kann beispielsweise in unmittelbarer Nähe zur Trommelbremse angeordnet sein. Die Elektronik und/oder Logik kann beispielsweise in einem ESP-Steuergerät oder einem anderen automotiven Steuergerät angeordnet sein.

Durch die Vorspannanordnung bzw. durch Rückstellelemente, beispielsweise in Form von Federn oder Ähnlichem, kann insbesondere ein Lüftspiel zwischen Elektromagnetanordnung und Bremsfläche gewährleistet werden.

Durch die bereits erwähnte Verwendung von Kugelgraphitguss oder Material mit ähnlich positiven Eigenschaften im Reibbereich können insbesondere Verschleißeigenschaften optimiert werden.

Weitere Merkmale und Vorteile wird der Fachmann dem nachfolgend mit Bezug auf die beigefügte Zeichnung beschriebenen Ausführungsbeispiel entnehmen. Dabei zeigen:
- Fig. 1:: eine elektrische Trommelbremse in Explosionsansicht,
und
- Fig. 2:: eine Schnittansicht einer Elektromagnetanordnung.

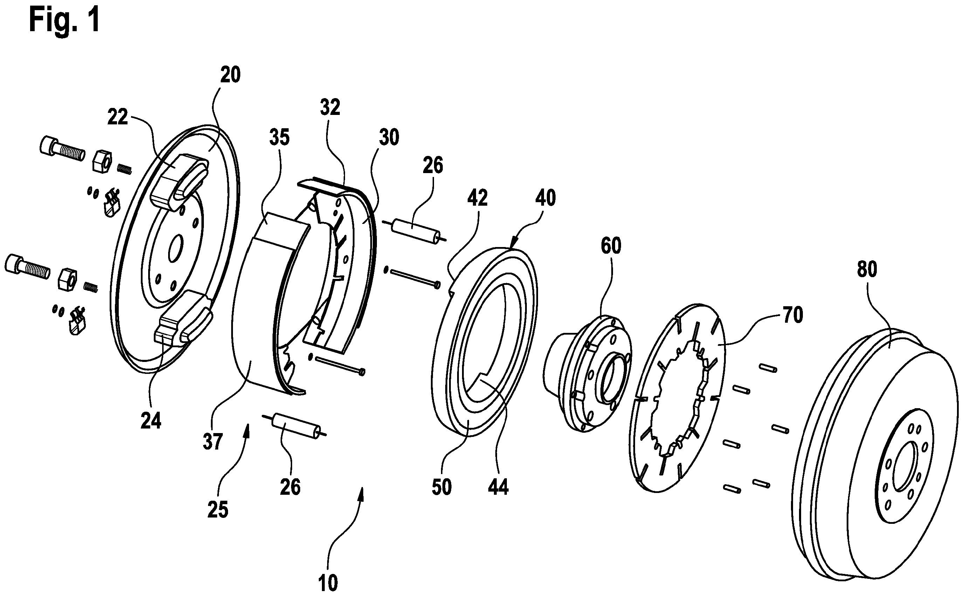

Fig. 1 zeigt eine elektrische PKW-Trommelbremse 10 gemäß einem Ausführungsbeispiel der Erfindung.

Die elektrische Trommelbremse 10 weist eine Grundplatte 20 auf. Auf dieser sind zwei Vorsprünge 22, 24 ausgebildet, welche weitere, nachfolgend zu beschreibende Komponenten tragen.

Die Trommelbremse 10 weist einen ersten Bremsbacken 30 und einen zweiten Bremsbacken 35 auf. Auf den Bremsbacken 30, 35 sind jeweilige Bremsbeläge 32, 37 radial außenseitig aufgebracht.

Die Trommelbremse 10 weist eine Elektromagnetanordnung 40 auf. In dieser ist eine elektrische Spule 50 angeordnet. Die Elektromagnetanordnung 40 ist vorliegend ringförmig ausgebildet, wobei ebenso die Spule 50 ringförmig ausgebildet ist.

An der Elektromagnetanordnung 40 sind ein erster Nocken 42 und ein zweiter Nocken 44 angeordnet, welche zur Grundplatte 20 hinweisen. Wenn die Trommelbremse 10 mit den gezeigten Komponenten in der gezeigten Orientierung zusammengebaut wird, so kommen die Nocken 42, 44 noch nicht mit den Bremsbacken 30, 35 in Eingriff. Wird jedoch die Elektromagnetanordnung 40 gedreht, so drücken die Nocken 42, 44 die Bremsbacken 30, 35 radial nach außen. Die entspricht einer Aktivierung der Trommelbremse 10.

Die Trommelbremse 10 weist ein Zwischenelement 60 auf. Das Zwischenelement 60 kann insbesondere auf das jeweilige Radlager aufgesetzt werden.

Die Trommelbremse 10 weist eine Scheibe 70 auf, an welcher eine zur Grundplatte 20 hinweisende, in Fig. 1 also nicht sichtbare Bremsfläche ausgebildet ist. Die Scheibe 70 ist auf das Zwischenelement 60 aufgesetzt.

Des Weiteren weist die Trommelbremse 10 eine Bremstrommel 80 auf.

Werden die in Fig. 1 gezeigten Komponenten zusammengebaut, so wird die Scheibe 70 fest mit der Bremstrommel 80 verbunden, dreht sich also mit der Bremstrommel 80 mit. Die Bremstrommel 80 wird des Weiteren mit einem nicht dargestellten drehbaren Element wie beispielsweise einer Antriebswelle verbunden, wobei eine Bremswirkung der Trommelbremse 10 auf dieses drehbare Element wirken soll. Die Grundplatte 20 ist hingegen typischerweise fest in einem Fahrzeug eingebaut, so dass sich das drehbare Element zusammen mit der Bremstrommel 80 und der Scheibe 70 relativ zu der Grundplatte 20 dreht.

Die Elektromagnetanordnung 40 wird durch eine Vorspannanordnung 25 mit zwei schematisch dargestellten Federn 26 in ihrer Grundstellung so vorgespannt, dass sie von der Scheibe 70 beabstandet ist. Dadurch kann ein ständiges Reiben der Elektromagnetanordnung 40 vermieden werden. Wird die Spule 50 bestromt, so wird diese aufgrund der magnetischen Wirkung gegen die Bremsfläche der Scheibe 70 gezogen. Da sich die Scheibe 70 dreht, wird somit auch die Elektromagnetanordnung 40 mitgedreht, und zwar durch die entstehende Reibung. Dadurch werden, wie weiter oben bereits beschrieben, die beiden Bremsbacken 30, 35 nach außen gedrückt, wodurch die Bremsbeläge 32, 37 mit der Bremstrommel 80 in Eingriff kommen. Dadurch wird eine Bremswirkung erzeugt.

Es sei erwähnt, dass bereits durch die Reibung der Elektromagnetanordnung 40 an der Bremsfläche der Scheibe 70 eine Reibung entsteht. Auch dadurch wird bereits eine Bremswirkung erzeugt, so dass sich die beiden Bremswirkungen addieren.

Die gezeigte Ausführung entspricht derjenigen einer Duo-Duplex-Trommelbremse.

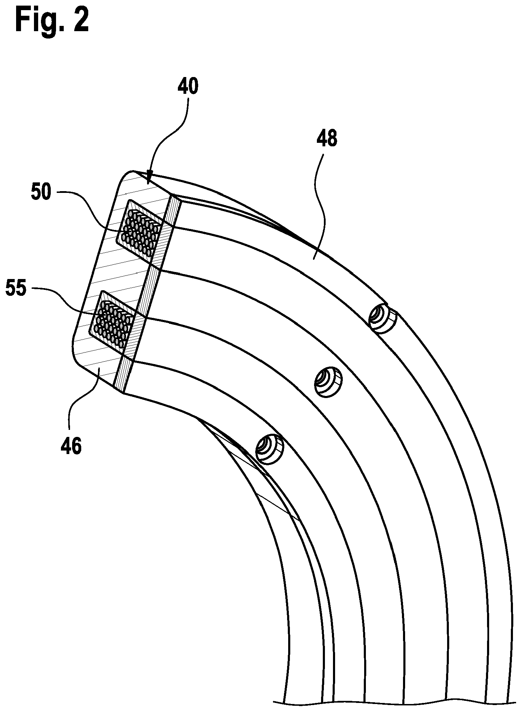

Fig. 2 zeigt eine leicht abgewandelte Form einer Elektromagnetanordnung 40, welche auch in der Ausführung von Fig. 1 verwendet werden kann. Dabei hat die Elektromagnetanordnung 40 ein Joch 46 in einer E-Form, so dass zwei Nuten im Joch 46 entstehen. In jeder dieser Nuten ist eine jeweilige Spule 50, 55 angeordnet, welche elektrisch unabhängig voneinander sind. Vorliegend ist also eine Ausführung mit zwei Spulen 50, 55 vorgesehen. Dies erhöht die Redundanz.

Zur Bremsfläche der Scheibe 70 hin weist die Elektromagnetanordnung 40 einen Reibbereich 48 auf, welcher aus einem anderen Material als das Joch 46 ausgebildet sein kann. Insbesondere kann für den Reibbereich 48 Kugelgraphitguss verwendet werden. Dies hat sich als besonders dauerhaft für die beabsichtigte Verwendung, welche bei jedem Bremsvorgang Reibung verursacht, als vorteilhaft erwiesen.

Es sei erwähnt, dass zur schnelleren Deaktivierung der Trommelbremse 10 eine Restmagnetisierung aktiv verringert werden kann. Hierzu kann der Magnet mit einer alternierenden, abfallenden Stromamplitude beaufschlagt werden.

Die gezeigte und beschriebene Ausführung hat sich als preiswerter elektrischer Aktuator herausgestellt, welcher beständig gegen lange Standzeiten und gegen Korrosion und/oder Verschmutzung ist. Auf eine ständige Reibung kann verzichtet werden, wie die Erfinder dieser Anmeldung herausgefunden haben. Die gezeigte Trommelbremse kann insbesondere gekapselt ausgeführt werden, was zu einer hohen Verfügbarkeit führt. Sie kann kompakt in einem Serienbauraum integriert werden. Sie kann auch als trockene Bremse ohne hydraulische Versorgungseinrichtungen ausgeführt sein, sie benötigt typischerweise lediglich einen elektrischen Anschluss zur Aktivierung.

Es sei darauf hingewiesen, dass in den Ansprüchen und in der Beschreibung Merkmale in Kombination beschrieben sein können, beispielsweise um das Verständnis zu erleichtern, obwohl diese auch separat voneinander verwendet werden können. Der Fachmann erkennt, dass solche Merkmale auch unabhängig voneinander mit anderen Merkmalen oder Merkmalskombinationen kombiniert werden können.

Rückbezüge in Unteransprüchen können bevorzugte Kombinationen der jeweiligen Merkmale kennzeichnen, schließen jedoch andere Merkmalskombinationen nicht aus.

### Bezugszeichenliste:

- 10:: elektrische Trommelbremse
- 20:: Grundplatte
- 22:: Vorsprung
- 24:: Vorsprung
- 25:: Vorspannanordnung
- 26:: Federn
- 30:: Bremsbacke
- 32:: Bremsbelag
- 35:: Bremsbacke
- 37:: Bremsbelag
- 40:: Elektromagnetanordnung
- 42:: Nocken
- 44:: Nocken
- 46:: Joch
- 48:: Reibbereich
- 50:: Spule
- 55:: Spule
- 60:: Zwischenelement
- 70:: Scheibe
- 80:: Bremstrommel

## Patentansprüche

1. Elektrische Trommelbremse (10) für ein drehbares Element eines Personenkraftwagens,
wobei die Trommelbremse (10) folgendes aufweist:
- eine Bremstrommel (80), welche drehfest mit dem drehbaren Element verbunden ist,
- eine Bremsfläche, welche drehfest mit der Bremstrommel (80) verbunden ist,
- eine Elektromagnetanordnung (40), welche zumindest eine elektrische Spule (50, 55) aufweist, welche bei Bestromung ein Magnetfeld erzeugt, das die Elektromagnetanordnung (40) gegen die Bremsfläche drückt, so dass die Elektromagnetanordnung (40) von der Bremsfläche begrenzt mitgedreht wird, und
- mindestens zwei Bremsbacken (30, 35),
- wobei die Elektromagnetanordnung (40) und die Bremsbacken (30, 35) angeordnet sind, so dass die Bremsbacken (30, 35) bei Drehung der Elektromagnetanordnung (40) von der Elektromagnetanordnung (40) gegen die Bremstrommel (80) gedrückt werden,
- wobei die Trommelbremse (10) eine Vorspannanordnung (25) aufweist, welche die Elektromagnetanordnung (40) in eine von der Bremsfläche beabstandete Lage vorspannt, **dadurch gekennzeichnet, dass**
- die elektrische Trommelbremse (10) eine Anzahl von Kraftmesseinrichtungen zwischen der Elektromagnetanordnung (40) und den Bremsbacken (30, 35) aufweist.

2. Elektrische Trommelbremse (10) nach Anspruch 1,
- wobei die Bremsfläche an der Bremstrommel (80) ausgebildet ist oder an einer zur Bremstrommel (80) separaten, mit dem drehbaren Element drehfest verbundenen Scheibe (70) ausgebildet ist.

3. Elektrische Trommelbremse (10) nach einem der vorhergehenden Ansprüche,
- wobei die Elektromagnetanordnung (40) ringförmig ausgeführt ist.

4. Elektrische Trommelbremse (10) nach einem der vorhergehenden Ansprüche,
- wobei die Elektromagnetanordnung (40) ein Joch (46) mit einem E-förmigen oder einem W-förmigen Querschnitt aufweist.

5. Elektrische Trommelbremse (10) nach einem der vorhergehenden Ansprüche,
- wobei die Elektromagnetanordnung (40) zwei elektrische Spulen (50, 55) aufweist.

6. Elektrische Trommelbremse (10) nach Anspruch 5,
- wobei jede elektrische Spule (50, 55) in einer jeweiligen Nut eines Jochs (46) der Elektromagnetanordnung (40) angeordnet ist.

7. Elektrische Trommelbremse (10) nach einem der vorhergehenden Ansprüche,
- wobei die Vorspannanordnung (25) eine Anzahl von Federn (26) aufweist.

8. Elektrische Trommelbremse (10) nach einem der vorhergehenden Ansprüche,
- wobei die Elektromagnetanordnung (40) ein Joch (46) aus Magnetblech aufweist und/oder einen Reibbereich (48), welcher im aktivierten Zustand mit der Bremsfläche in Eingriff kommt, aus Kugelgraphitguss aufweist.

9. Elektrische Trommelbremse (10) nach einem der vorhergehenden Ansprüche,
- welche einen Rastmechanismus zum mechanischen Halten der Elektromagnetanordnung (40) an der Bremsfläche aufweist.

10. Elektrische Trommelbremse (10) nach einem der vorhergehenden Ansprüche,
- welche teilweise oder vollständig in einer Flüssigkeit oder in Getriebeöl angeordnet ist.

11. Elektrische Trommelbremse (10) nach einem der vorhergehenden Ansprüche,
- wobei die Trommelbremse (10) eine Duo-Duplex-Trommelbremse ist.

12. Elektrische Trommelbremse (10) nach einem der vorhergehenden Ansprüche,
- wobei die Elektromagnetanordnung (40) eine Anzahl von Nocken (42, 44) aufweist, welche bei Drehung der Elektromagnetanordnung (40) mit den Bremsbacken (30, 35) zu deren Betätigung in Eingriff kommen.

13. Elektrische Trommelbremse (10) nach einem der vorhergehenden Ansprüche,
- wobei die Bremstrommel (80) aus Aluminium besteht und eine eingelegte magnetisch leitende Bremsfläche aufweist.

14. Elektrische Trommelbremse (10) nach einem der vorhergehenden Ansprüche,
- wobei mehrere Spulen (50, 55) kreisförmig verteilt mit axialen Spulenkernen angeordnet sind.

## Claims

1. Electric drum brake (10) for a rotatable element of a passenger car,
wherein the drum brake (10) has the following:
- a brake drum (80) which is co-rotationally connected to the rotatable element,
- a brake surface which is co-rotationally connected to the brake drum (80),
- an electromagnet arrangement (40) which has at least one electrical coil (50, 55) which, when energized, generates a magnetic field which presses the electromagnet arrangement (40) against the brake surface, such that the electromagnet arrangement (40) is concomitantly rotated to a limited extent by the brake surface, and
- at least two brake shoes (30, 35),
- wherein the electromagnet arrangement (40) and the brake shoes (30, 35) are arranged such that the brake shoes (30, 35) are pressed against the brake drum (80) by the electromagnet arrangement (40) when the electromagnet arrangement (40) is rotated,
- wherein the drum brake (10) has a preloading arrangement (25) which preloads the electromagnet arrangement (40) into a position at a distance from the brake surface, **characterized in that**
- the electric drum brake (10) has a number of force-measuring devices between the electromagnet arrangement (40) and the brake shoes (30, 35).

2. Electric drum brake (10) according to Claim 1,
- wherein the brake surface is formed on the brake drum (80) or is formed on a disc (70) which is separate from the brake drum (80) and which is co-rotationally connected to the rotatable element.

3. Electric drum brake (10) according to one of the preceding claims,
- wherein the electromagnet arrangement (40) is of ring-shaped design.

4. Electric drum brake (10) according to one of the preceding claims,
- wherein the electromagnet arrangement (40) has a yoke (46) with an E-shaped or a W-shaped cross section.

5. Electric drum brake (10) according to one of the preceding claims,
- wherein the electromagnet arrangement (40) has two electrical coils (50, 55).

6. Electric drum brake (10) according to Claim 5,
- wherein each electrical coil (50, 55) is arranged in a respective groove of a yoke (46) of the electromagnet arrangement (40).

7. Electric drum brake (10) according to one of the preceding claims,
- wherein the preloading arrangement (25) has a number of springs (26).

8. Electric drum brake (10) according to one of the preceding claims,
- wherein the electromagnet arrangement (40) has a yoke (46) made of magnetic sheet metal and/or a friction region (48) which is made of spheroidal graphite cast iron and which in the activated state engages with the brake surface.

9. Electric drum brake (10) according to one of the preceding claims,
- which has a detent mechanism for mechanically holding the electromagnet arrangement (40) on the brake surface.

10. Electric drum brake (10) according to one of the preceding claims,
- which is partially or entirely arranged in a liquid or in transmission oil.

11. Electric drum brake (10) according to one of the preceding claims,
- wherein the drum brake (10) is a duo-duplex drum brake.

12. Electric drum brake (10) according to one of the preceding claims,
- wherein the electromagnet arrangement (40) has a number of cams (42, 44) which, when the electromagnet arrangement (40) is rotated, engage with the brake shoes (30, 35) to actuate the latter.

13. Electric drum brake (10) according to one of the preceding claims,
- wherein the brake drum (80) consists of aluminium and has an inlaid magnetically conductive brake surface.

14. Electric drum brake (10) according to one of the preceding claims,
- wherein a plurality of coils (50, 55) are arranged to be distributed circularly with axial coil cores.

## Revendications

1. Frein à tambour électrique (10) pour un élément rotatif d'une voiture particulière,
dans lequel le frein à tambour (10) présente :
- un tambour de frein (80) qui est relié de manière solidaire en rotation à l'élément rotatif,
- une surface de freinage qui est reliée de manière solidaire en rotation au tambour de frein (80),
- un agencement de solénoïde (40) qui présente au moins une bobine électrique (50, 55) qui, lorsqu'elle est alimentée en courant, génère un champ magnétique qui plaque l'agencement de solénoïde (40) contre la surface de freinage de sorte que l'agencement de solénoïde (40) est entraîné en étant limité par la surface de freinage, et
- au moins deux mâchoires de frein (30, 35),
- dans lequel l'agencement de solénoïde (40) et les mâchoires de frein (30, 35) sont disposés de sorte que lors d'une rotation de l'agencement de solénoïde (40), les mâchoires de frein (30, 35) sont plaquées contre le tambour de frein (80) par l'agencement de solénoïde (40),
- dans lequel le frein à tambour (10) présente un agencement de précontrainte (25) qui précontraint l'agencement de solénoïde (40) dans une position espacée de la surface de freinage,
**caractérisé en ce que**
- le frein à tambour électrique (10) présente un nombre de moyens de mesure de force entre l'agencement de solénoïde (40) et les mâchoires de frein (30, 35).

2. Frein à tambour électrique (10) selon la revendication 1,
- dans lequel la surface de freinage est réalisée sur le tambour de frein (80) ou est réalisée sur un disque (70) séparé du tambour de frein (80), relié de manière solidaire en rotation à l'élément rotatif.

3. Frein à tambour électrique (10) selon l'une quelconque des revendications précédentes,
- dans lequel l'agencement de solénoïde (40) est réalisé en forme d'anneau.

4. Frein à tambour électrique (10) selon l'une quelconque des revendications précédentes,
- dans lequel l'agencement de solénoïde (40) présente une culasse (46) à section transversale en forme de E ou en forme de W.

5. Frein à tambour électrique (10) selon l'une quelconque des revendications précédentes,
- dans lequel l'agencement de solénoïde (40) présente deux bobines électriques (50, 55).

6. Frein à tambour électrique (10) selon la revendication 5,
- dans lequel chaque bobine électrique (50, 55) est disposée dans une rainure respective d'une culasse (46) de l'agencement de solénoïde (40).

7. Frein à tambour électrique (10) selon l'une quelconque des revendications précédentes,
- dans lequel l'agencement de précontrainte (25) présente un nombre de ressorts (26).

8. Frein à tambour électrique (10) selon l'une quelconque des revendications précédentes,
- dans lequel l'agencement de solénoïde (40) présente une culasse (46) en tôle magnétique et/ou une zone de friction (48) en fonte à graphite sphéroïdal qui vient en prise avec la surface de freinage à l'état activé.

9. Frein à tambour électrique (10) selon l'une quelconque des revendications précédentes,
- qui présente un mécanisme d'arrêt pour le maintien mécanique de l'agencement de solénoïde (40) sur la surface de freinage.

10. Frein à tambour électrique (10) selon l'une quelconque des revendications précédentes,
- qui est disposé partiellement ou complètement dans un liquide ou dans une huile à engrenages.

11. Frein à tambour électrique (10) selon l'une quelconque des revendications précédentes,
- dans lequel le frein à tambour (10) est un frein à tambour duo-duplex.

12. Frein à tambour électrique (10) selon l'une quelconque des revendications précédentes,
- dans lequel l'agencement de solénoïde (40) présente un nombre de cames (42, 44) qui, lors de la rotation de l'agencement de solénoïde (40), viennent en prise avec les mâchoires de frein (30, 35) en vue de les actionner.

13. Frein à tambour électrique (10) selon l'une quelconque des revendications précédentes,
- dans lequel le tambour de frein (80) est en aluminium et présente une surface de freinage magnétiquement conductrice insérée.

14. Frein à tambour électrique (10) selon l'une quelconque des revendications précédentes,
- dans lequel plusieurs bobines (50, 55) sont réparties en cercle avec des noyaux de bobine axiaux.
